# EUROPEAN PATENT APPLICATION

(11) **EP 0 897 167 A2**
(43) Date of publication of application: **17.02.1999**
(21) Application number: 98305358.8
(22) Date of filing: 06.07.1998
(51) Int. Cl.: G07F 17/32

(54) **Locking apparatus for use in game machine**

(30) Priority: 07.08.1997 JP 213442/97
(71) Applicant: Konami Co., Ltd., Kobe-shi, Hyogo-ken (JP)
(72) Inventor: Majima, Shiro, Artarmon, NSW 2064 (AU)
(74) Representative: Brunner, Michael John

(57) **Abstract**

A locking apparatus of a game machine has the following components: a locking bar (21) provided with a plurality of first engaging portions (21a, 21a); engaging members (22, 22) having second engaging portions (22a, 22a) engageable with the first engaging portions (21a, 21a); a locking bar actuating member (25) for actuating the locking bar (21) from an engaging position where the first engaging portions (21a) engage with the second engaging portions (22a) to a disengage position where the first engaging portions (21a) are out of engagement with the second engaging portions (22a); and locking means (27) which performs, in accordance with operation of a key, a change-over between an unlocking state which permits the actuation of the locking bar (21) into the disengage position by the locking bar actuating member (25) and a locking state which prohibits the actuation of the locking bar (21) into the disengage position by the locking bar actuating member (25). The locking bar is disposed on the main part (3), while the engaging members (22), locking bar actuating member (25) and the locking means (27) are disposed on the door (5) hinged to the main part (3). This arrangement serves to reduce the size of the installation space to be preserved in the main part, while avoiding increase of the weight of the door assembly.

## Description

The present invention relates to a locking apparatus which locks a door on a main part of a game machine.

In general, a housing constituting a main part of a game machine has a vertically elongated construction and, therefore, a locking apparatus for locking a door on the main part of the game machine is required to lock the door against breaking at a plurality of portions of the door which are spaced in the vertical direction. Hitherto, therefore, a locking apparatus of the kind described has a lock provided on the door at a position near one side edge thereof and a vertically movable locking bar which also is provided on the door. The locking bar is operatively connected to the shaft of the lock such that the locking bar moves up and down in accordance with the rotation of the lock. The locking bar is provided with a plurality of locking pawls which are spaced in the vertical direction, while engaging members engageable with the locking pawls are provided on the main part of the game machine. All the locking pawls are simultaneously brought into or out of engagement with the associated engaging members simply by a vertical stroking of the locking bar. This type of arrangement is disclosed, for example, in Japanese Patent Laid-Open No. 8-155118.

In the known locking apparatus of the type described above, the door carries the vertically elongated locking bar, the lock, and all the members which operatively connect the lock to the locking bar. Consequently, the weight of the door assembly undesirably increases to cause various problems or inconveniences. For instance, the door is required to have a high level of rigidity to carry the heavy weight, and the hinge between the door and the main part of the game machine also has to have a strength high enough to support the heavy weight of the door assembly, resulting in a rise of costs of production of the game machine.

The problems described above would be eliminated if the arrangement is such that only the engaging members are carried by the door, while other components such as the locking bar and the lock are mounted on the main part of the game machine. In such a case, however, the number of parts to be secured to the main part of the game machine increases tremendously, so that a large installation space has to be preserved in the main part of the game machine in order to accommodate these parts.

Accordingly, it is an object of the present invention to provide a locking apparatus for a game machine, which is improved to reduce the weight to be borne by the door, without requiring an increase in the installation space to be preserved in the main part of the game machine.

To this end, according to the present invention, there is provided a locking apparatus of a game machine, having a locking bar provided with a plurality of first engaging portions, engaging members having second engaging portions engageable with the first engaging portions, a locking bar actuating member for actuating the locking bar from an engaging position where the first engaging portions engage with the second engaging portions to a disengage position where the first engaging portions are out of engagement with the second engaging portions, and locking means which performs, in accordance with operation of a key, a change-over between an unlocking state which permits the actuation of the locking bar into the disengage position by the locking bar actuating member and a locking state which prohibits the actuation of the locking bar into the disengage position by the locking bar actuating member, characterized in that the locking bar is disposed on one of a game machine main part and a door which is secured to the main part, while the engaging members, locking bar actuating member and the locking means are disposed on the other of the main part and the door.

The locking bar is an elongated member and, hence, has to have a high level of rigidity in order to offer high strength and tightness of the locking apparatus. The locking bar, therefore, is the heaviest component among the components of the locking apparatus. In accordance with the present invention, the heaviest locking bar is borne by one of the door and the main part of the game machine, while other components such as the engaging members, locking rod actuating member and the locking means are carried by the other of the door and the main part. Consequently, the door is required to bear lesser weight than in the conventional arrangements in which the door carries the heavy components such as the locking bar, locking bar actuating member and the locking means. In addition, the installation space to be preserved inside the main part of the game machine is not increased significantly, as compared with the case where the major components including the locking bar, locking bar actuating member and the locking means are mounted inside the main part of the game machine.

According to the invention, the arrangement may be such that the engaging members, locking bar actuating member and the locking means are disposed on the door, while the locking bar is disposed on the main part of the game machine.

According to this arrangement, two different operations: namely, an unlocking operation for unlocking the locking means by using a key, and a disengaging operation for bringing the locking bar from engaging state into disengaged state through the action of the locking bar actuating member, can easily and consecutively performed from the outside of the door.

Preferably, the locking bar actuating member has an operation knob operable externally of the door, the locking means has a locking member movable, in accordance with the operation of the key, between a locking position where the locking member prohibits operation of the locking bar actuating member and an unlocking position where the locking member permits operation of the locking bar actuating member, and wherein the locking bar is held in the engaging position when the locking bar actuating member is constrained by the locking member against operation.

According to this arrangement, the change-over between the locking and unlocking states is performed by the action of the locking member through the locking means. The door can be opened by operating the operation knob so as to bring the locking bar from the engaging position to the disengaging position, after the locking member has been moved to the unlocking position by the operation of the locking means. With this arrangement, therefore, all the operations necessary for opening the door, such as unlocking of the locking means, operation of the operation knob and the swinging of the door can be done without requiring any action to be done on the main part, so that the door can be opened easily. The operation knob can be used as a knob on which the manual force is exerted for swinging the door into open position.

Preferably, the arrangement is such that the operation knob of the locking bar actuating member is operable in the same direction as the movement of the locking bar. Therefore, there is no need for provision of a device which would otherwise be necessary for the purpose of transforming the direction of movement of the locking bar actuating member into the direction of movement of the locking bar. Consequently, the number of parts is reduced to prevent any increase in the size of the installation space to be preserved in the game machine.

The locking bar actuating member and the locking means are separate members or may be integrated with each other.

Preferably, the arrangement is such that the first and second engaging portions engage with each other when the locking bar is at the lower end of its stroke, and urging means are provided for urging the locking bar towards the lower end of the stroke.

According to this arrangement, the locking bar is urged into the engaging position by the combined effect of its weight and the urging force exerted by the urging means, so that the locking bar can move to the engaging position without fail, even when its weight is comparatively small.

It is also preferred that the locking apparatus further comprises a roller provided on one of the door and the main part of the game machine; and a guide member provided on the other of the door and the main part and having a tapered surface, the roller and the tapered surface being engageable with each other when the door is closed, so as to produce upward force acting on the door.

With this arrangement, the tendency for the door to incline due to its weight is prevented by virtue of the engagement between the roller and the guide member, when the door is being moved to the closing position.

Preferably, at least one of the first engaging portions and the second engaging portions have tapered surfaces for engagement with the other.

In accordance with this arrangement, the first and second engaging portions, when brought into contact with each other, produces an upward force which acts to lift the locking bar against the combined force of the urging means and the weight of the locking bar. The locking bar then moves downward the combined force, so that a first engagement is achieved between the first and second engaging portions.

The above and other objects, features and advantages of the present invention will become clear from the following description when the same is read in conjunction with the accompanying drawings.
Fig. 1 is an illustration of a portion of a main part and a door of a slot machine incorporating an embodiment of the locking apparatus of the present invention, as viewed from the interior of a housing constituting the main part;
Fig. 2 is a plan view of a critical portion of the structure shown in Fig. 1, as viewed from the exterior of the housing;
Figs. 3A and 3B are illustrations of the locking apparatus in locked and unlocked states, respectively;
   and
Figs. 4A and 4B are illustrations of the slot machine incorporating the locking apparatus embodying the present invention, in a state in which the door has been closed and in a state in which the door has been opened to show the internal equipment.

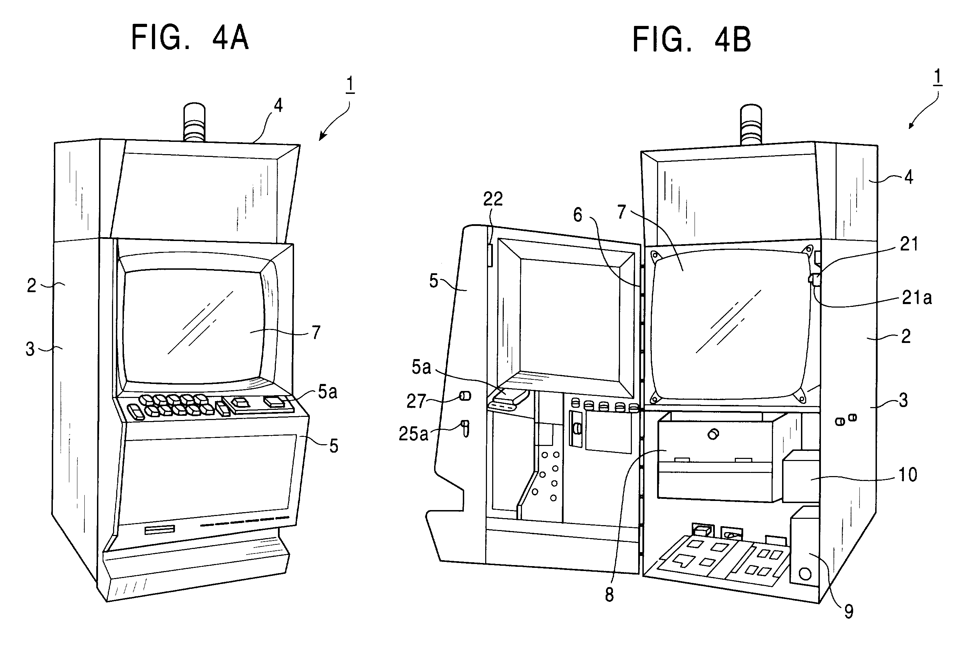

Referring to Fig. 4, a slot machine as a typical game machine incorporating a locking apparatus of the present invention has a vertically elongated housing 2 and various components and parts mounted in and on the housing 2. The housing 2 includes a main part 3 and a top box 4 provided on the main part 3. A door 5 is swingably connected to the front side of the main part 3 by means of a hinge 6 provided on the left side edge thereof, so as to be swingable between an open position and a close position. The main part 3 accommodates a monitor 7. Disposed under the monitor 7 are an electric console 8, an A.C. power supply unit 9 and a mounting base 10 for mounting a slip verification unit (not shown) which verifies a slip inserted through a slit 5a formed in the door 5.

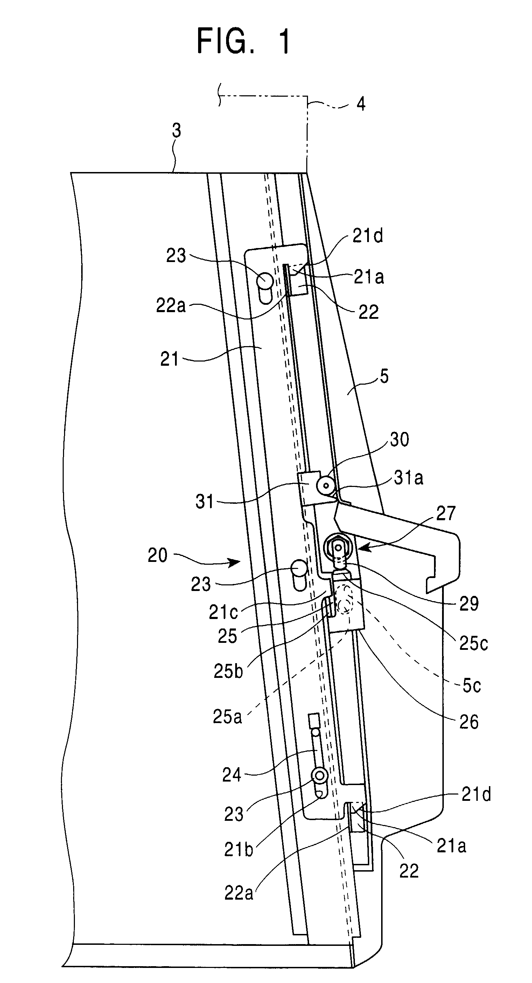

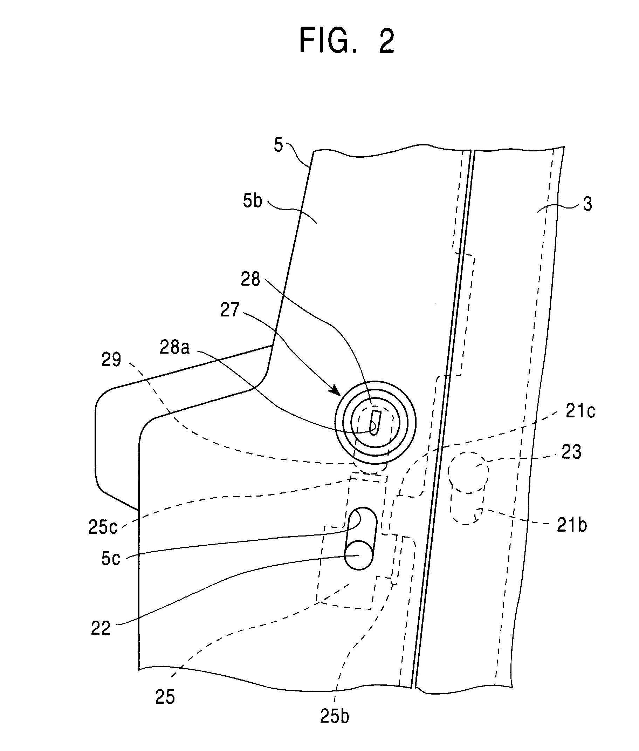

As will be seen from Figs. 1 and 2, a locking apparatus 20 is provided for locking the free side, i.e., the right side remote from the hinge 6, of the door 5 onto the associated side of the main part 3 of the housing 2. The locking apparatus 20 has a locking bar 21 disposed on the main part 3, and a pair of engaging members 22, 22 provided on the door 5 and vertically spaced from each other. The locking bar 21 is an elongated sheet member extending substantially upright, and is provided at its upper and lower end portions with pawls 21a, 21a serving as the first engaging portions.

The locking bar 21 is also provided with three elongated holes 21b having longer axes extending in the longitudinal direction of the locking bar 21. These three elongated holes 21b slidably receive respective guide pins 23 fixed to the main part 3, so that the locking rod 21 is carried on the main part 3 for vertical movement. The above-mentioned engaging members 22 are fixed to the inner surface of the door 5 by suitable fixing means such as bolts (not shown). Engaging projections 22a, 22a engageable with the pawls 21a, 21a are provided on the ends of the engaging members 22, 22 adjacent to the main part 3.

A tensile coiled spring 24 is stretched between the locking bar 21 and the lowermost guide pin 23. The locking bar 21 is held at the lower end of its stroke, i.e., the position shown in Fig. 1, by the combined effect produced by the downward pulling force exerted by the tensile coiled spring 24 and the weight of the locking bar 21 itself. The engagement between the pawls 21a and the engaging projections 22a is achieved to lock the door 5 in the close position when the locking bar 21 is held at this position. This position, therefore, is referred to also as an "engaging position". The door 5 can be opened when the locking bar 21 is moved upward to disengage the pawls 21a from the associated engaging projections 22a.

The upward movement of the locking bar 21 is effected by a locking bar actuating member 25 provided on the inner surface of the door 5. More specifically, the locking bar actuating member 25 is supported by a bracket 26 fixed to the inner surface of the door 5, so as to be movable in the same direction as the direction of movement of the locking bar 21. The locking bar actuating member 25 is provided with a cylindrical operation knob 25a (see Fig. 1) which projects outward through an elongated hole 5c formed in the door 5. The locking bar actuating member 21 is also provided with a tabular actuating projection 25b which projects from the bracket 26 towards the locking bar 21. When the door 5 is in the close position, the actuating projection 25b engages with the lower end of a projection 21c of the locking bar 21.

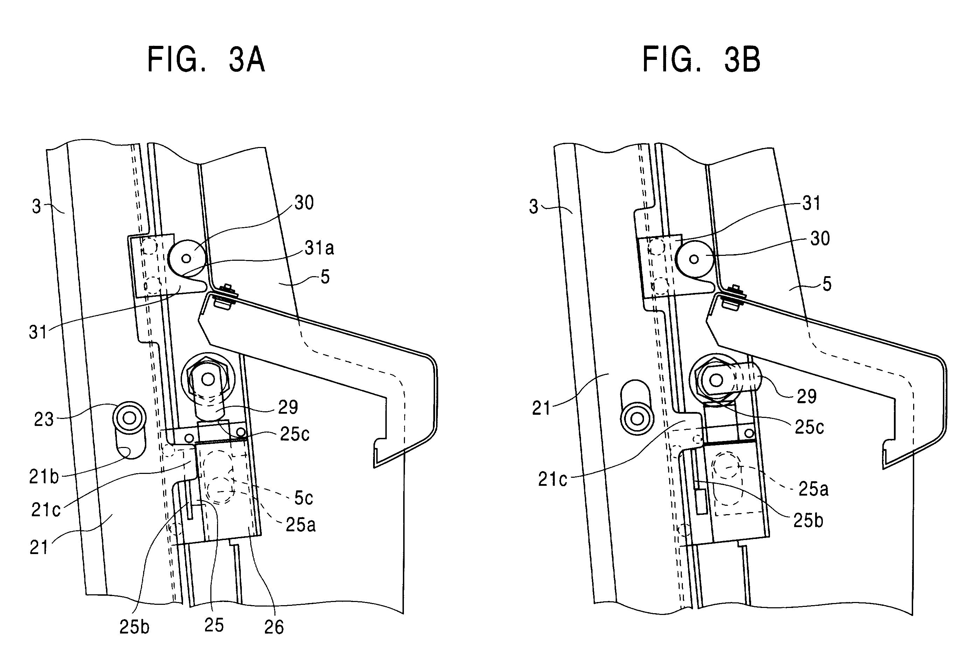

A lock 27 is provided on the door 5 at a position above the operation knob 25a. The lock 27 has a rotary shaft 28 which is normally prohibited to rotate but becomes rotatable when a predetermined key (not shown) is inserted into a key hole 28a formed in the outer surface of the door 5. The lock 27 further has a tabular locking member 29 which is connected to the rotary shaft 27 at a position inside the door 5. As will be seen also from Fig. 3, a tabular restraining portion 25c for cooperation with the locking member 29 is provided on the locking bar actuating member 25.

In operation of the locking apparatus 20 having the described construction, when the rotary shaft 28 of the lock 27 is rotated to bring the locking member 29 to the position shown in Fig. 3A, the locking member 29 engages with the restraining portion 25c of the locking bar actuating member 25, so that the locking bar actuating member 25 is prevented from moving upward. In this state, it is impossible to upwardly move the operation knob 25a externally of the door 5 and, hence, the locking bar 21 cannot be lifted from the engaging position. In this state, therefore, the locking bar 21 is fixed at the engaging position shown in Fig. 3A by the combined effect of the tensile coiled spring 24 and the weight of the locking bar 21 itself, as explained before, so that the engaging pawls 21a are held in engagement with the associated engaging projections 22a of the engaging members 22, whereby the door 5 remains locked against opening action.

However, when the locking member 29 is moved to the position shown in Fig. 3B, the locking member 29 leaves the restraining portion 25c so as to allow the locking bar actuating member 25 to move upward. Thus, the lock 27 is unlocked, so that the locking bar 21 can be moved upward to an upper disengagement position as the locking bar actuating member 25 is moved upward by upward force exerted on the operation knob 25a externally of the housing 2. As a result, the engaging pawls 21a of the locking bar 21 are disengaged from the engaging projections 22a of the engaging members, so as to allow the door 5 to open. The described operation for opening the door 5 can be done in an efficient manner because the two types of actions: namely, unlocking of the lock 27 and the upward lifting of the operation knob 25a, can be performed consecutively at positions which are vertically adjacent to each other.

When the door 5 is swung to the closing position, a roller 30 rotatably carried by the door 5 rolls onto a tapered surface 31a of a guide member 31 provided on the main part 3, whereby the door 5 is prevented from inclining due to the weight thereof. At the same time, tapered surfaces 21d formed on the engaging pawls 2 la of the locking bar 21 are brought into mating surfaces of the engaging projections 22a of the engaging members 22, so that a force is generated to lift the locking bar 21 against the force of the coiled spring 24. A further movement of the door 5 to the closing position causes the engaging projections 22a to pass the tapered surfaces of the engaging pawls 21a, so that the locking bar 21 is caused to move downward by the combined effect of the force of the spring 24 and the weight thereof, whereby the engaging pawls 21a are brought into form engagement with the associated engaging projections 21a.

Although the invention has been described through its specific forms, it is to be understood that the described embodiments are only illustrative and various changes and modifications may be imparted thereto. For instance, the arrangement may be such that the locking bar 21 is disposed on the door 5, while other components such as the engaging members 22, locking bar actuating member 25 and the lock 27 are carried by the main part 3 of the game machine. The arrangement also may be such that a lever-type locking bar actuating member is directly provided on the rotary shaft 28 integrally therewith, so as to substitute for the separate locking bar actuating member 25 employed in the described embodiment, so that the change-over between locked and unlocked state and the actuation of the locking bar into and out of the engaging position are simultaneously performed at the same portion of the locking apparatus.

It will be clear that the invention can be applied to a variety of game machines, although a slot game has been specifically mentioned in the foregoing description.

As will be fully understood from the foregoing description, according to the present invention, the total weight of the whole locking apparatus is suitably shared both by the door and the main part of the game machine, such that, while the locking bar which is the heaviest component is carried by the main part, other components including the engaging members, locking bar actuating member and the lock are carried by the door, or vice versa. It is thus possible to reduce the size of the installation space to be preserved in the main part of the game machine, while avoiding increment of the weight of the door assembly. When the locking bar is provided on the main part, two types of operations: namely, change-over between locked and unlocked state of the lock and actuation of the locking bar by the locking bar actuating member, can be done efficiently at two adjacent positions on the door. When the locking apparatus is designed such that the direction of operation of the locking bar actuating member and the direction of movement of the locking bar are the same, the number of parts of the locking apparatus is reduced by virtue of elimination of a mechanism for converting the direction of action, so that the required size of the installation space is further reduced, as well as production costs and burden of protective maintenance of the locking apparatus.

## Claims

1. A locking apparatus of a game machine, having a locking bar (21) provided with a plurality of first engaging portions (21a, 21a), engaging members (22, 22) having second engaging portions (22a, 22a) engageable with said first engaging portions (21a, 21a), a locking bar actuating member (25) for actuating said locking bar (21) from an engaging position where said first engaging portions (21a) engage with said second engaging portions (22a) to a disengage position where said first engaging portions (21a) are out of engagement with said second engaging portions (22a), and locking means (27) which performs, in accordance with operation of a key, a change-over between an unlocking state which permits the actuation of said locking bar (21) into said disengage position by said locking bar actuating member (25) and a locking state which prohibits the actuation of said locking bar (21) into said disengage position by said locking bar actuating member (25), characterized in that said locking bar is disposed on one of a game machine main part (3) and a door (5) which is secured to said main part (3), while said engaging members (22), locking bar actuating member (25) and said locking means (27) are disposed on the other of said main part (3) and said door (5).

2. A locking apparatus according to Claim 1, wherein said engaging members (22), locking bar actuating member (25) and said locking means (27) are disposed on said door (5) and said locking bar (21) is disposed on said main part (3) of the game machine.

3. A locking apparatus according to Claim 2, wherein said locking bar actuating member (25) has an operation knob operable externally of the door (5), said locking means (27) has a locking member (29) movable, in accordance with the operation of said key, between a locking position where said locking member (29) prohibits operation of said locking bar actuating member (25) and an unlocking position where said locking member (29) permits operation of said locking bar actuating member (25), and wherein said locking bar (21) is held in said engaging position when said locking bar actuating member (25) is constrained by said locking member (29) against operation.

4. A locking apparatus according to Claim 3, wherein said operation knob (25a) of said locking bar actuating member (25) is operable in the same direction as the movement of said locking bar (21).

5. A locking apparatus according to one of Claims 1 to 4, wherein said locking bar actuating member (25) and said locking means (27) are separate members.

6. A locking apparatus according to one of Claims 1 to 4, wherein said locking bar actuating member (25) and said locking means (27) are integrated with each other.

7. A locking apparatus according to one of Claims 1 to 4, further comprising urging means for urging said locking bar (21) towards the lower end of stroke of said locking bar (21) where said first and second engaging portions (21a, 22a) engage with each other.

8. A locking apparatus according to one of Claims 1 to 4, further comprising: a roller (30) provided on one of said door (5) and said main part (3) of said game machine; and a guide member (31) provided on the other of said door (5) and said main part (3) and having a tapered surface (31a), said roller (30) and said tapered surface (31a) being engageable with each other when said door (5) is closed, so as to produce upward force acting on said door (5).

9. A locking apparatus according to one of Claims 1 to 4, wherein at least one of said first engaging portions (21a) and said second engaging portions (22a) have tapered surfaces for engagement with the other.
